# EUROPÄISCHE PATENTSCHRIFT

(11) **EP 2 888 498 B1**
(45) Veröffentlichungstag und Bekanntmachung des Hinweises auf die Patenterteilung: **03.10.2018**
(21) Anmeldenummer: 13750643.2
(22) Anmeldetag: 19.08.2013
(51) Int. Cl.: F16D 55/226, F16D 65/18

(54) **SCHEIBENBREMSE, INSBESONDERE FÜR NUTZFAHRZEUGE**
DISC BRAKE, IN PARTICULAR FOR UTILITY VEHICLES
FREIN À DISQUE, EN PARTICULIER POUR VÉHICULES UTILITAIRES

(30) Priorität: 22.08.2012 DE 102012016735
(43) Veröffentlichungstag der Anmeldung: 01.07.2015
(73) Patentinhaber: Wabco Radbremsen GmbH, 68229 Mannheim (DE)
(72) Erfinder: HENNING, Paul, 68723 Schwetzingen (DE)
(74) Vertreter: Leinweber & Zimmermann
(86) Internationale Anmeldenummer: PCT/EP2013/002489
(87) Internationale Veröffentlichungsnummer: WO 2014/029488

(56) Entgegenhaltungen:
- EP-B1- 1 384 913
- DE-A1-102009 004 424
- US-A1- 2005 029 056

## Beschreibung

Die Erfindung betrifft eine Scheibenbremse, insbesondere für Nutzfahrzeuge mit einem Bremssattel, einer Zuspanneinrichtung, die einen innerhalb des Bremssattels liegenden Exzenter sowie einen innerhalb des Bremssattels liegenden Drehhebel aufweist, einer außerhalb des Bremssattels liegenden ersten Betätigungseinrichtung für die Zuspanneinrichtung, einer ersten Kopplungseinrichtung zum Koppeln der ersten Betätigungseinrichtung mit der Zuspanneinrichtung, einer zweiten Betätigungseinrichtung für die Zuspanneinrichtung und einer innerhalb des Bremssattels liegenden zweiten Kopplungseinrichtung zum Koppeln der zweiten Betätigungseinrichtung mit der Zuspanneinrichtung.

Bei der ersten Betätigungseinrichtung kann es sich um eine beispielsweise pneumatisch betriebene Betriebsbremse handeln, wohingegen es sich bei der zweiten Betätigungseinrichtung um eine Feststell- bzw. Parkbremse handeln kann. Die erfindungsgemäße Scheibenbremse ist insbesondere für den Einsatz bei Radgrößen von 17 Zoll bis 25 Zoll mit dementsprechend hohen Bremsleistungen einsetzbar.

Die Scheibenbremse der eingangs genannten Art ist beispielsweise aus der EP 1 384 913 B1 bekannt. Bei der bekannten Scheibenbremse ist neben der ersten (mechanischen) Spreizeinrichtung eine zweite Spreizeinrichtung vorgesehen. Die zweite Spreizeinrichtung ist Teil einer elektrisch angetriebenen Betätigungseinrichtung. Hiermit kann eine Feststellbremsfunktion mit weniger Bauraumbedarf realisiert werden, insbesondere weil kein langbauender Kombizylinder als pneumatischer Betätigungs- bzw. Federspeicherzylinder verwendet werden muß, sondern ein einfacher, kürzer bauender Bremszylinder/Pneumatikzylinder zum Einsatz kommen kann.

Nach einer ersten Variante der bekannten Scheibenbremse liegen die Teile der ersten und der zweiten Betätigungseinrichtung koaxial zueinander und sind funktional miteinander gekoppelt. Daher werden auch die Funktionsteile der zweiten Betätigungseinrichtung immer dann axial mitbewegt, wenn die erste Betätigungseinrichtung bei Betriebsbremsungen angesteuert wird. Damit müssen die genannten Teile, die nicht unbeträchtliche Massen haben, bei jedem Bremsvorgang mitbewegt werden, was einen zusätzlichen Energiebedarf erfordert. Ferner sind auch entsprechend starke Rückstellmittel (Druckfedern) notwendig. Der dafür erforderliche Platzbedarf ist nachteilig. Darüber hinaus ist nachteilig, daß nach der bekannten Lösung Teile der zweiten Betätigungseinrichtung im Kraftfluß der ersten Betätigungseinrichtung oder der Zuspannung liegen, was eine dementsprechend erhöhte Teiledimensionierung erforderlich macht.

Nach einer zweiten Variante der bekannten Scheibenbremse liegt die zweite Betätigungseinrichtung in einer parallelen Achse zu der ersten Betätigungseinrichtung, wobei eine Drehkopplung entweder direkt über (Stirn-)Zahnräder oder indirekt über ein zwischengeschaltetes (Stirn-)Zahnrad als Getriebe erfolgt. Da gleichzeitig die zugehörige Nachstellmutter am Außenumfang starr mit einem (Stirn-)Zahnrad ausgebildet ist, in das dann entweder direkt oder indirekt die zweite Betätigungseinrichtung eingreift, finden bei jeder Ansteuerung der ersten Betätigungseinrichtung axiale Relativbewegungen im Zahneingriffsbereich statt. Dies kann nachteilig zu Verschleiß führen.

Da nach beiden Varianten der bekannten Scheibenbremse die Teile der ersten und teilweise auch die Teile der zweiten Betätigungseinrichtung lagefest an ein Druckstück gekoppelt sind und das Druckstück in/an Führungsleisten des inneren Bremssattels geführt und abgestützt ist, müssen diese Führungseinrichtungen aufwendig hergestellt werden. Dies erfordert nachteiligen Platz- und Bearbeitungsaufwand.

Die aus der DE 10 2010 025 232 A1 bekannte Scheibenbremse ist der oben beschriebenen Scheibenbremse sehr ähnlich. Es soll allerdings dahingehend eine Verbesserung vorgenommen werden, daß im Kraftfluß der zweiten Betätigungseinrichtung ein zusätzliches Federspeicherelement angeordnet ist, um ein Nachspannen der Zuspannung bei einem abgestellten Fahrzeug zu ermöglichen, wenn sich durch Abkühlung unter Schrumpfung der Bremsenteile ein Bremskraftverlust einstellt. Dieser Verlust soll durch das Federspeicherelement kompensiert werden. Nachteilig bei dieser Lösung sind Zusatzbauteile und entsprechend der Bauteilgröße erforderlicher, wenigstens in Axialrichtung sich erstreckender, vergrößerter Platzbedarf im/am Bremssattel.

Bei beiden oben beschriebenen bekannten Scheibenbremsen sind alle Bauteile in einem weitestgehend geschlossenen Bremssattelgehäuse angeordnet. Daher lassen sich bei/nach der Teilebestückung keine in der Serienfertigung erforderlichen Kontrollen auf Funktions- und Lagebestimmung durchführen, weil alle innenliegenden Teile vom Sattelgehäuse verdeckt sind.

Aus der DE 10 2009 004 424 A1 ist eine Scheibenbremse bekannt, deren Bremssattel eine abnehmbare Platte mit einer Öffnung für einen Betätigungsstößel aufweist. Die Platte ist abnehmbar, damit Bremsenteile in den Sattelinnenraum eingebracht werden können. Sie dient dazu, den Sattelinnenraum (bis auf die Öffnung für den Betätigungsstößel) dichtend zu verschließen.

Eine ähnliche Platte, die auch ähnlichen Zwecken dient, ist auch bei der Scheibenbremse nach der US 2005/0029056 A1 vorgesehen.

Der Erfindung liegt die Aufgabe zugrunde, die Scheibenbremse nach dem Oberbegriff von Anspruch 1 derart weiterzubilden, daß bei verbesserter Kompaktheit der Bremse und optimierter Teilebestückung auch die Zuverlässigkeit erhöht wird.

Erfindungsgemäß wird die gestellte Aufgabe mit einer Scheibenbremse nach Anspruch 1 gelöst.

Damit können nach automatischer Bestückung in der Serienfertigung Kontrollen auf Funktions- und Lagebestimmung beispielsweise durch Videoüberwachungen vorgenommen werden, weil alle wesentlichen Funktionsteile der Bremse in im Bremssattel eingebautem Zustand weitestgehend in Funktionsstellung sichtbar freiliegen. Erst danach wird der Deckel angebracht.

Die Inspektionsöffnung ist erfindungsgemäß bevorzugt mit einer Montageöffnung kombiniert, durch die der Exzenter und der Drehhebel zum Montieren/Demontieren hindurchpassen. Damit wird quasi eine Doppelöffnung geschaffen, die gegenüber zwei separaten Öffnungen insofern vorteilhaft ist, als daß der Sattel nur an einer Stelle geschwächt wird.

Der Deckel verschließt erfindungsgemäß bevorzugt in angebrachtem Zustand sowohl die Inspektionsöffnung als auch die Montageöffnung. Dadurch ist nur ein einziger Deckel für beide Öffnungen erforderlich. Die Teilezahl ist reduziert.

Erfindungsgemäß gehört zu der zweiten Kopplungseinrichtung ein ein Betätigungsmoment übertragendes Zahnrad, das mit einer axial verschieblich gehaltenen und auf einer Druckspindel sitzenden Nachstellmutter eines Nachstellgetriebes der Zuspanneinrichtung unmittelbar oder über ein Zwischengetriebe kämmt. Dadurch ist eine besonders einfache Lösung für die Kopplung realisiert.

Das Zahnrad ist erfindungsgemäß axial unverschieblich gehalten. Dadurch besteht die Möglichkeit, auch die zweite Betätigungseinrichtung axial unverschieblich zu halten, so dass sie nicht bei jedem Bremsvorgang, insbesondere bei jeder Ansteuerung der ersten Betätigungseinrichtung axial verschoben werden muss, was - entsprechend den obigen Ausführungen - mit einem Axialverschieben von nicht unerheblichen Massen verbunden wäre.

Das Merkmal, wonach das genannte Zahnrad axial unverschieblich gehalten ist, wodurch eine axial unverschiebliche Halterung der zweiten Betätigungseinrichtung möglich ist, ist unabhängig davon, ob die oben erwähnte Inspektionsöffnung vorgesehen ist.

Nach einer weiter bevorzugten Ausführungsform der Erfindung ist das Zahnrad ein Kegelzahnrad. Dadurch besteht die Möglichkeit, die Hauptachse der zweiten Betätigungseinrichtung gegenüber der Hauptachse der Bremse, der Zuspanneinrichtung und/oder der ersten Betätigungseinrichtung anzustellen. Dies kann Vorteile insbesondere hinsichtlich des Gesamtplatzbedarfs haben.

Das Zahnrad ist nach einer weiter bevorzugten Ausführungsform der Erfindung axial mittels einer Feder vorgespannt. Dadurch wird die erforderliche Haltekraft erzeugt, die unerwünschten Teileverdrehungen durch Schwingungen im Fahrbetrieb entgegentritt.

Die Feder dient erfindungsgemäß weiter bevorzugt (gleichzeitig auch) zum Zurückstellen der Zuspanneinrichtung bei Bremsentlastung. Sie hat mithin eine Doppelfunktion.

Nach einer besonders bevorzugten Ausführungsform der Erfindung ist eine Axialverzahnung zum Koppeln des Zahnrades mit der Nachstellmutter vorgesehen. Diese Axialverzahnung ist bevorzugt an der Nachstellmutter am Außenumfang und in einem axialen Teilbereich ausgebildet. Die Nachstellmutter kann dadurch über die Axialverzahnung durch das Zahn- bzw. Kegelrad hindurchgleiten. Damit nimmt das Zahn- bzw. Kegelrad nicht an Axialbewegungen der Nachstellmutter teil, was die oben im einzelnen beschriebenen Vorteile mit sich bringt.

Erfindungsgemäß weiter bevorzugt ist ein Lagerblock zum radialen Festlegen der Nachstellmutter vorgesehen. Dadurch kann die Nachstellmutter besonders verläßlich in Position gehalten werden.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Fig. 1: schematisch eine perspektivische Ansicht eines Ausführungsbeispiels des erfindungsgemäßen Bremssattels,
- Fig. 2: eine perspektivische Teilansicht eines Ausführungsbeispiels der erfindungsgemäßen Scheibenbremse,
- Fig. 3: eine Draufsicht auf die Scheibenbremse,
- Fig. 4: die gleiche Ansicht wie Fig. 2, jedoch von einem anderen Ausführungsbeispiel,
- Fig. 5: die gleiche Ansicht wie Fig. 3, jedoch von dem Ausführungsbeispiel nach Fig. 4,
- Fig. 6: eine schematische Schnittansicht der Scheibenbremse,
- Fig. 7: eine weitere Schnittansicht der Scheibenbremse und
- Fig. 8: eine schematische perspektivische Ansicht der Scheibenbremse

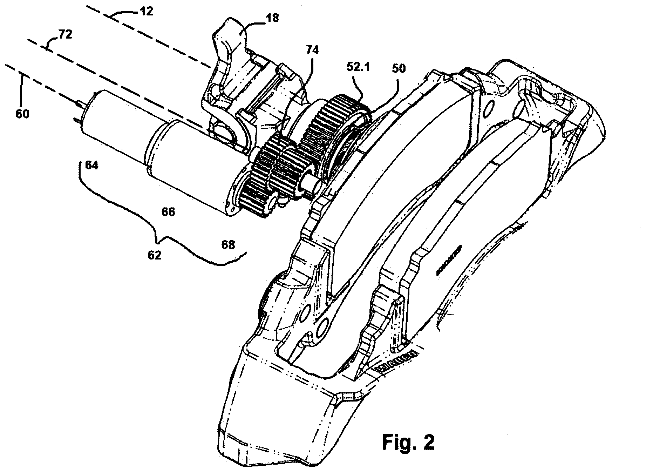

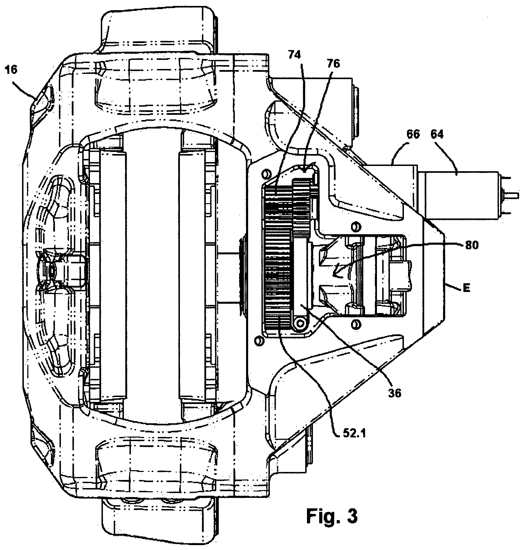

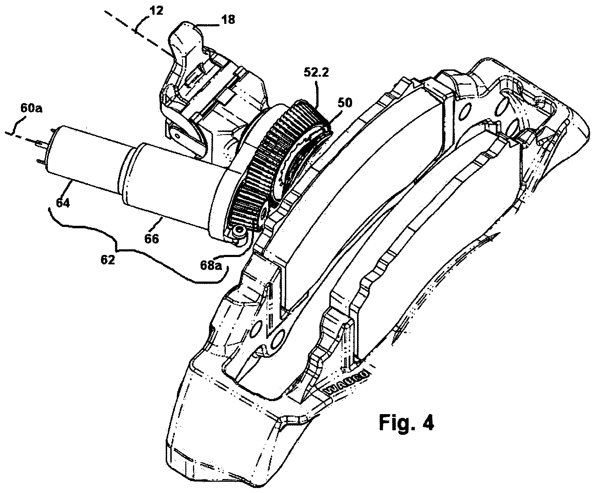

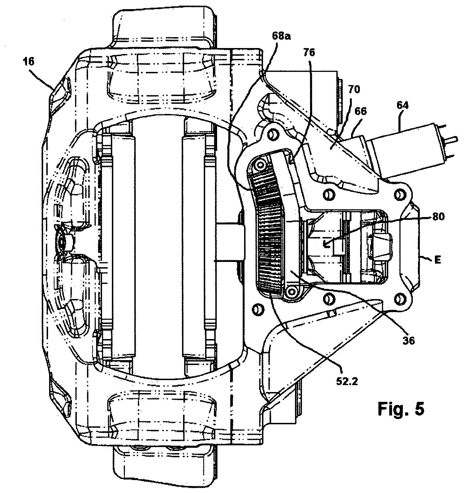

Bei den beiden Varianten nach den Figuren 2 und 3 einerseits und den Figuren 4 und 5 andererseits ist die erste Betätigungseinrichtung jeweils identisch. Lediglich zur Drehkopplung der zweiten Betätigungseinrichtung mit der Zuspanneinrichtung ist bei der Variante 1 nach den Figuren 2 und 3 ein Zahnrad vorgesehen, während bei der Variante 2 nach den Figuren 4 und 5 ein Kegelzahnrad verwendet wird. Bis auf diesen Teileunterschied sind die beiden Varianten gleich, weshalb sich die folgende Beschreibung auf beide Varianten bezieht.

Eine erste Betätigungseinrichtung 10 ist in dem gezeigten Ausführungsbeispiel von einem Pneumatikzylinder gebildet. Eine Achse 12, die senkrecht zur Bremsscheibenebene steht, stellt die Bremsenachse dar. Die erste Betätigungseinrichtung 10 dient zur Betätigung der Betriebsbremse, wozu an einem Abstützbereich 14 am Ende E des Bremssattels 16 ein Drehhebel 18 mit einer exzentrisch wirkenden Bremswelle 20 abgestützt ist. Der Drehhebel 18 wird an seinem freien Ende in bekannter Weise über den am Sattelende angeflanschten Pneumatikzylinder als erste Betätigungseinrichtung 10 betätigt, und zwar durch Verschwenken. Der Drehhebel 18 dient mit der exzentrischen Bremswelle 20 bei beiden Varianten der Bremskraftverstärkung.

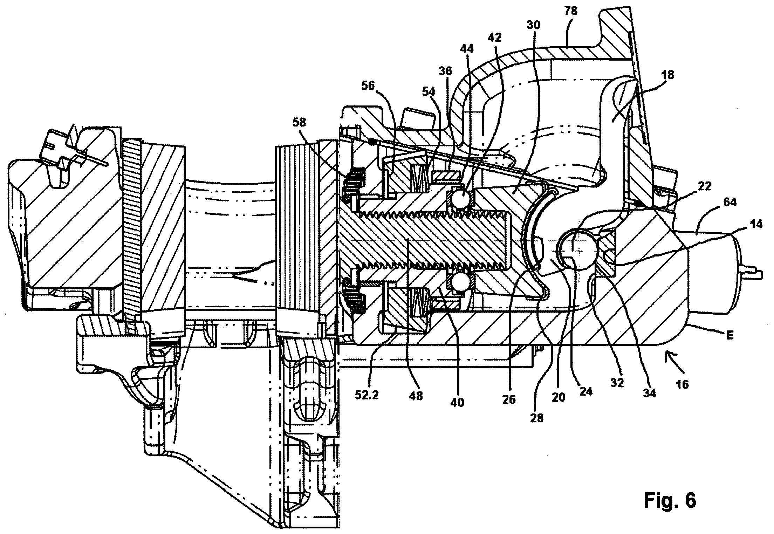

Der Drehhebel 18 gehört zu einer als vormontierbare/einbaubare Baugruppe. Dazu gehört ferner ein Rollenkörper 22 unter Zwischenfügung eines Nadellagers 24 als Teillager, wobei sich der Rollenkörper 22 entlang der Bremswelle 20 erstreckt. Scheibenzugewandt gehört ferner neben der teilzylinderförmigen Bremswelle 20 ein weiteres Nadellager 26 zu der Baugruppe, wobei dieser Seite zugewandt unter Zwischenfügung eines Lagerkäfigs 28 ein Druckstück 30 anliegt. Der Lagerkäfig 28 ist bei diesem Ausführungsbeispiel mit Haltelaschen (vgl. Fig. 6) derart ausgeformt, daß er über die Laschen den Drehhebel mit Rollenkörper und Nadellagern sowie das Druckstück in den Sattel einbaufähig als Baugruppe ausbildet.

Wie insbesondere Fig. 6 zu entnehmen ist, stützt sich der Rollenkörper 22 über eine Steuerplatte 32 an dem Abstützbereich 14 in der inneren Sattelkontur ab. Die Steuerplatte 32 weist unten und am Ende der Steuerfläche liegend einen Rollenanschlag 34 auf, der definiert die Position der Ruhestellung des Drehhebels 18 vorgibt. Die damit genau definierte Hebelstellung ist insbesondere dafür wichtig, daß Reaktionskräfte von einer zweiten Betätigungseinrichtung 62 bei einer Feststellbremsung über die Teile der Zuspanneinrichtung genauestens in den Bremssattel 16 eingeleitet werden. Über die Stärke der Steuerplatte 32 lässt sich zudem je nach Bremsenanforderung auch noch die Hebelübersetzung beeinflussen. Der Rollenanschlag 34 liegt in einem definierten Abstand zur Verschiebeachse entlang einem ortsfest gehaltenen Lagerblock 36, damit - wie weiter unten erläutert - ein von Verspannungen freies Drehen/Axialgleiten einer zu einem Nachstellgetriebe gehörenden Nachstellmutter 40 bei der Aktivierung der ersten und/oder der zweiten Betätigungseinrichtung sichergestellt ist. Einzelheiten zu der Steuerplatte und ihrer Funktion sind der DE-PS 44 30 258 zu entnehmen, auf die hier ausdrücklich verwiesen wird.

Zwischen dem Druckstück 30 und der Nachstellmutter 40 ist ein Axial-(Kugel-)Lager 42 mit beidseitigen Lagerschalen angeordnet, wobei die Lagerschalen radial ein-/auswärts gegen Radialvorsprünge seitens dem Druckstück 30 und der Nachstellmutter 40 abgestützt sind.

Zur Dreh- und axialen Gleitlagerung der Nachstellmutter 40 dient bei der in der Zeichnung dargestellten Ausführungsform der Erfindung der ortsfest am/im unteren Teil des Bremssattels 16 gehalterte Lagerblock 36, der dort verschraubt ist. Der Lagerblock 36 dient dabei wenigstens zur allseitigen Radialabstützung der darin drehbar und axial verschieblich gehalterten Nachstellmutter 40. Da der Lagerblock 36 somit weitestgehend alle Führungen/Abstützungen wenigstens der Zuspanneinrichtung übernimmt, können bisher erforderliche Sattelführungen entfallen. Um die Gleit- und Drehbarkeit der Nachstellmutter 40 zu verbessern, ist ein radiales Gleitlager 44 in den Lagerblock 36 verbracht bzw. darin verpreßt. Zur Seite der Bremsscheibe, also in der eine Funktionsöffnung 46 aufweisenden Wandung 49 des Bremssattels 16, ist die Nachstellmutter 40 weiterhin geführt und abgestützt.

Die Nachstellmutter 40 weist eine mit einem Innengewinde versehene Durchgangsöffnung auf, durch die sich eine drehfest gehalterte Druckspindel 48 mit passendem Außengewinde bis in eine Sacklochöffnung des Druckstücks 30 erstreckt. Sind die Bremsbeläge/ist die Bremsscheibe neu, erstreckt sich die Druckspindel 48 bis in die Sacklochöffnung und wird zunehmend zum Ausgleich von Belag/Scheibenverschleiß herausgeschraubt. Die in den hier gezeigten Ausführungsbeispielen dargestellte Innengewindeausführung kann auch durch eine Spindel-/Kugelumlaufbüchsenanordnung ersetzt werden.

Bei den in der Zeichnung dargestellten Ausführungsbeispielen weist die Nachstellmutter 40 am Außenumfang und in einem axialen Teilbereich eine Axialverzahnung 50 auf, vgl. die Figuren 2 und 4. Auf diesem Verzahnungsabschnitt sitzt bei der Variante 1 nach Fig. 2 ein Zahnrad 52.1, das am Innendurchmesser eine komplementäre Axialverzahnung aufweist. Bei der Variante 2 nach der Fig. 4 handelt es sich um ein Kegelzahnrad 52.2. Bei der in der Zeichnung dargestellten Scheibenbremse sind die Axialverzahnungen jeweils als Nutenverzahnungen ausgeführt, wodurch die Gleitfähigkeit (axial untereinander) und die Drehmomentübertragung sehr gut ist.

Zwischen einander zugewendeten Flächen/Radialbünden des Zahnrades 52.1 bzw. des Kegelzahnrades 52.2 einerseits und der Nachstellmutter 40 andererseits liegt eine Druckfeder oder ein Paket Tellerfedern 54. Dadurch werden die Teile der Zuspannung einerseits gegen das hintere Sattelende E bzw. den Abstützbereich 14 verspannt. Andererseits wird das Zahn- bzw. Kegelzahnrad 52.1, 52.2 gegen die innere Wandung 49 des Bremssattels 16 gedrückt. Zur Reibungsminderung bei Drehung des gegen die Wandung 49 des Bremssattels 16 gedrückten Zahn- bzw. Kegelzahnrades 52.1, 52.2 ist zwischen den Kontaktflächen ein Axiallager/Gleitlager 56 angeordnet.

Da sich die Druckfeder bzw. die Tellerfedern 54 nicht am Bremssattel 16, sondern an dem Zahnrad bzw. Kegelzahnrad 52.1, 52.2 abstützen, kann gleichzeitig die erforderliche Haltekraft erzeugt werden, um unerwünschten Teileverdrehungen durch Schwingungen im Fahrbetrieb wirkungsvoll zu begegnen.

Entsprechend den obigen Ausführungen ist das Zahn- bzw. Kegelzahnrad 52.1, 52.2 drehfest mit der Nachstellmutter 40 verbunden, jedoch von Axialbewegungen bei Betätigung der Zuspannung frei. Das Zahn- bzw. Kegelrad 52.1, 52.2 nimmt also nicht an Axialbewegungen teil, wie dies bei bekannten Scheibenbremsen der Fall ist, vgl. die obigen Ausführungen. Die Nachstellmutter 40 gleitet über die Axialverzahnung 50 durch das Zahn- bzw. Kegelzahnrad 52.1, 52.2 hindurch.

Zur Abdichtung des Sattelinnenraums ist im Bereich der Funktionsöffnung 46 und des die Öffnung durchdringenden Zuspannteils, nämlich der Druckspindel 48 eine Dichtung 58 angeordnet.

In einer zu der ersten Achse 12 nach Variante 1 parallelen zweiten Achse 60 ist die zweite Betätigungseinrichtung 62 angeordnet. Diese weist einen als Antrieb dienenden Elektromotor 64, ein damit gekoppeltes (Planeten-)Getriebe 66 und ein Zahnrad 68 auf. Die zweite Betätigungseinrichtung 62 wird in eine am Sattelende ausgebildete Öffnung 70 verbracht und darin gehaltert. Sie erstreckt sich mithin teilweise von außen zugänglich bis in den Sattelinnenraum.

Zwischen der ersten Achse 12 und der zweiten Achse 60 liegt eine dazu parallele dritte Achse 72 mit einem drehbar im Bremssattel 16 gelagerten Zwischengetriebe 74, das bei der in der Zeichnung nach Fig. 2 dargestellten Ausführungsbeispiel zwei Zahnräder unterschiedlichen Durchmessers aufweist, die mit dem Zahnrad 68 bzw. dem Zahnrad 52.1 kämmen.

Da die drei Achsen 12, 60 und 72 in unterschiedlichen Ebenen zueinander liegen können, läßt sich räumlich gesehen eine kompakte Anordnung innerhalb des Bremssattels 16 schaffen.

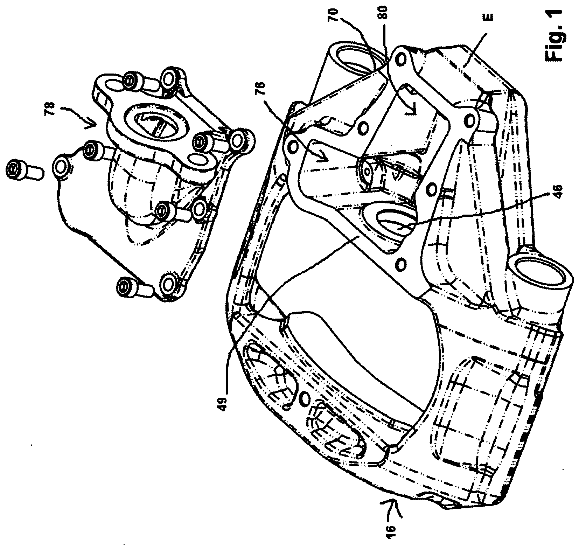

So zeigt beispielsweise Fig. 1 einen L-förmig ausgebildeten Sattelinnenraum, wobei der auf die Bremsscheibenebene im wesentlichen senkrecht zulaufende Schenkel den Aufnahmeraum der Zuspanneinrichtung und der im wesentlichen quer zur Bremsscheibenebene verlaufende Schenkel den Aufnahmeraum zum teilweisen Aufnehmen der zweiten Betätigungseinrichtung 62 bildet. Dieser L-förmige, radial offene Innen- bzw. Aufnahmeraum findet sich bei beiden Varianten 1 und 2.

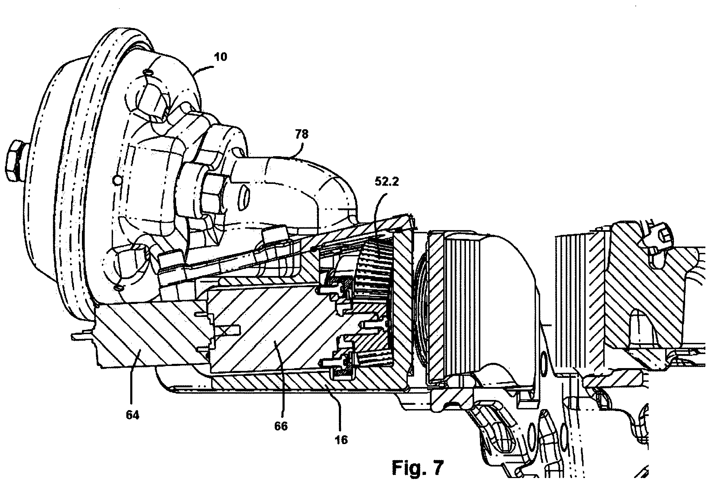

Die Variante 2 nach den Figuren 4 bis 7 unterscheidet sich von der Variante 1 nur durch die Ausführung der Zahnräder 52.2 und 68a als Kegelzahnräder. Ferner ist das Zwischengetriebe 74 bei der Variante 2 nicht nötig und daher entfallen.

Das Kegelzahnrad 68a kämmt direkt mit dem Kegelzahnrad 52.2. Dadurch verläuft die zweite Achse 60a der zweiten Zuspannung 62 unter einem Winkel, der abhängig vom gewährten/erforderlichen Kegelwinkel ist, auf die erste Achse 12. Neben mechanischen Vorteilen bietet dieser Achsverlauf den weiteren Vorteil, daß zum einen der für den Zahneingriff erforderliche Platzbedarf im Sattelinnenraum (durch Wegfall des Zwischengetriebes 74) reduziert werden kann und zum anderen die zweite Betätigungseinrichtung 62 beliebig auf einer gedachten Kegelmantelfläche um die erste Achse 12 verschwenkt und in einer entsprechenden Aufnahme-/Halteöffnung des Bremssattels positioniert werden kann. Dadurch lassen sich enge Einbauverhältnisse realisieren.

Ist die Bremse mit allen Zuspannungsteilen bestückt, können beispielsweise in der Serienfertigung durch die offene Sattelbauweise vielfältige Lage- und Funktionskontrollen, wie beispielsweise Videoüberwachungen, durchgeführt werden, weil alle Teile sichtbar sind und mit Hilfe des Lagerblocks 36 funktions- und verliersicher im unteren Teil des Bremssattels 16 gehaltert sind.

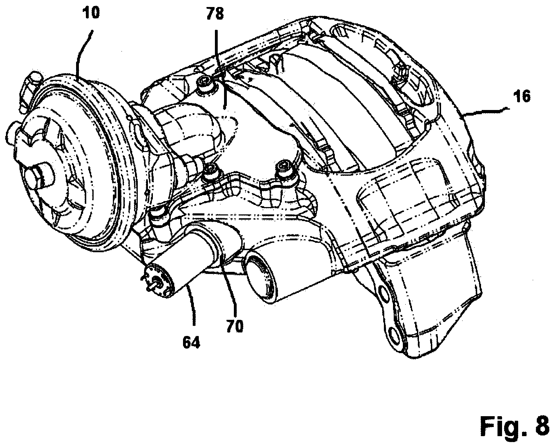

Es sind nämlich insbesondere das Zahnrad 68 und das Zwischengetriebe 74 bzw. das Kegelzahnrad 68a als Kopplungseinrichtung zum Koppeln des Elektromotors 64 mit der Zuspanneinrichtung durch eine Inspektionsöffnung 76 inspizierbar, wenngleich sie in montiertem Zustand innerhalb des Bremssattels 16 liegen. Die Inspektionsöffnung 76 ist dabei dichtend mit einem Deckel 78 verschlossen, der seinerseits an den Bremssattel 16 angeflanscht ist und an den die erste Betätigungseinrichtung 10 angeflanscht ist. Dabei dienen bei dem Ausführungsbeispiel nach den Fig. 4 bis 7 sechs über den Umfang des Deckels 78 verteilte Schrauben zum Anflanschen des Deckels 78 an dem Bremssattel 16. Es können aber auch mehr oder weniger Schrauben sein. Zum Anflanschen des Bremszylinders 10 dienen gemäß den Figuren 1, 7 und 8 zwei Schrauben, deren Muttern zur Bremsscheibe hin zeigen. Auch hier können mehr oder weniger Schrauben (Muttern) verwendet werden. Somit liegt der Befestigungsflansch bremsscheibenabgewandt am Sattelende.

Dabei verschließt der Deckel 78 auch gleichzeitig eine Montageöffnung 80, durch die die Zuspanneinrichtung, insbesondere als vormontierte Baugruppe zum Montieren/Demontieren hindurchpaßt. Mit anderen Worten sind die Öffnungen 76 und 80 miteinander zu einer einzigen L-förmigen Öffnung kombiniert, die von dem gemeinsamen Deckel 78 verschlossen wird.

Der Deckel 78 liegt außerhalb des Kraftflusses bei Bremsbetätigung, und insbesondere außerhalb des Abstützbereiches 14. Damit ist der Deckel frei von Führungs- und Abstützlagerungen der Sattelinnenteile.

Nachfolgend ist die Funktion anhand der Variante 2 erläutert.

Wird der Drehhebel 18 für die Betriebsbremse mittels des als erste Betätigungseinrichtung 10 dienenden Pneumatikzylinders beaufschlagt, verschwenkt der Drehhebel 18 in Fig. 6 nach links, wodurch die exzentrisch ausgelegte Bremswelle 20 eine Wegzunahme in Richtung Bremsscheibe erfährt. Dabei rollt der Rollenkörper 22 von seinem Rollenanschlag 34 nach oben, wobei die Bewegungsgrößen aufwärts zur Längsbewegung so aufeinander abgestimmt sind, daß die der Bremswelle 20 vorgelagerten Teile der Zuspannung auch verspannungsfrei entlang der Führung innerhalb des Lagerblocks 36 geführt/abgestützt werden.

Dabei gleitet die Nachstellmutter 40 axial gegen die Vorspannkraft der Druckfeder/Tellerfedern 54 innerhalb des ortsfesten Kegelzahnrades 52.2 über die Axialverzahnung 50 durch. Weil keine Axialbewegungen seitens des Kegelzahnrades 52.2 stattfinden, kommt es auch zu keinen gegenläufigen Relativbewegungen innerhalb des Zahneingriffs mit der zweiten Betätigungseinrichtung 62 bzw. dem Kegelzahnrad 68a.

Bei Bremsentlastung schiebt die Druckfeder (bzw. schieben die Tellerfedern) 54 alle Teile in ihre Ausgangsstellungen zurück.

Wird die zweite Betätigungseinrichtung 62 aktiviert, erfolgt je nach Bedarf eine Verdrehung des Kegelzahnrades 52.2 der Zuspanneinrichtung und somit auch der Nachstellmutter 40. Die drehfest gehalterte Druckspindel 48 wird somit in Richtung Bremsbelag/Bremsscheibe herausgeschraubt und die restlichen Teile der Zuspannung dienen der Einleitung von Zuspann-/Reaktionskräften in dem rückseitigen Sattelbereich.

Unter Berücksichtigung der Gewindeausformungen/Steigungen der Spindel-/Mutteranordnung bzw. der Spindel-/Kugelumlaufbüchsenanordnung lassen sich über die Dimensionierungen der Zahnrad- bzw. Kegel(zahn)-Radpaarungen in Verbindung mit dem auszulegenden Planetengetriebe 66 und der Dimensionierung des Elektromotors 64 sowohl die Antriebsgeschwindigkeiten und die benötigten Bremskräfte als auch die notwendigen Haltemomente (Selbsthemmung) steuern/festlegen/nachsetzen. Dies hängt von dem jeweiligen Einsatzfall und der Größe bzw. dem Gewicht des Fahrzeugs ab, für das die Scheibenbremse zu konzipieren ist.

Die Aktivierung der ersten und der zweiten Betätigungseinrichtung 10, 62 kann sowohl einzeln als auch in Kombination miteinander erfolgen. Vorzugsweise dient die zweite Betätigungseinrichtung 62 zum Aktivieren/Deaktivieren der Feststellbremse. Um hier ein automatisches Nachsetzen zum Ausgleich des Bremsenschwundes bei Abkühlung mit erforderlicher Haltekraft/Bremskraft mittels der zweiten Betätigungseinrichtung zu ermöglichen, ist/kann dafür eine Steuerung vorhanden sein, die die aktuell ermittelten Temperaturen von Bremsbelägen und/oder Bremsscheiben abgleicht, auswertet und dann die entsprechend zum Halten des Fahrzeuges benötigte Bremskraft durch Aktivierung / Bestromung der zweiten Betätigungseinrichtung 62 veranlaßt. Eine weitere Möglichkeit, das automatische Nachsetzen zu veranlassen besteht darin, daß nach einem definierten Zeitabstand die Aktivierung / Bestromung der zweiten Betätigungseinrichtung 62 erfolgt. Eine noch weitere Möglichkeit besteht auch darin, daß nach einem in der Steuerung hinterlegten Vergleichsmodell entsprechende Referenzwerte / -größen als Grundlage für das erforderliche Nachsetzen benutzt werden.

Ebenso dient die zweite Betätigungseinrichtung 62 zum Ausgleich von Bremsbelag-/Scheibenverschleiß, indem die Nachstellmutter 40 verdreht und die Druckspindel 48 mit erforderlichem Lüftspiel herausgeschraubt wird. Ferner kann die zweite Betätigungseinrichtung 62 zur Lüftspielüberbrückung bei Betätigung der ersten Betätigungseinrichtung 10 voreilen. Dadurch kann der Leerhub verringert/reduziert bzw. mit entsprechend zusätzlicher Wegreserve des Drehhebels als Krafthub vorteilhaft beeinflußt werden.

Da beide Betätigungseinrichtungen beispielsweise auch in Notbremsungen aktiviert werden können, sind die dabei erforderlichen großen Bremskräfte realisierbar.

Über die zweite Betätigungseinrichtung 62 erfolgt darüber hinaus auch eine Bremsenjustierung, wie beispielsweise bei einem Belagwechsel die Bremse rück- oder zuzustellen ist. Auch die Notlösung der Bremse mit Hilfe der zweiten Betätigungseinrichtung 62 ist möglich, wenn dafür entweder endseitig der Elektromotor 64 oder das vorgelagerte Planetengetriebe 66 mechanisch verdreht wird.

Generell erfolgt die Aktivierung der zweiten Betätigungseinrichtung 62 zur Erfüllung der angeforderten Funktionen über ein Steuerprogramm, das dem Einzelfall entsprechend auszulegen ist und hier nicht näher erläutert wird.

Die beiden Ausführungsvarianten 1 und 2 sind anhand einer Einspindelzuspannung erläutert worden. Vom Wesen und Inhalt des Erfindungsgedankens her sei angemerkt, daß die Erfindung auch auf Mehrspindelbremsen mit und ohne Druckstück anwendbar ist.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem Bremssattel (16),
einer Zuspanneinrichtung, die einen innerhalb des Bremssattels liegenden Exzenter (20) und einen innerhalb des Bremssattels liegenden Drehhebel (18) aufweist,
einer außerhalb des Bremssattels liegenden ersten Betätigungseinrichtung (10) für die Zuspanneinrichtung,
einer ersten Kopplungseinrichtung zum Koppeln der ersten Betätigungseinrichtung mit der Zuspanneinrichtung,
einer zweiten Betätigungseinrichtung (64) für die Zuspanneinrichtung und
einer innerhalb des Bremssattels liegenden zweiten Kopplungseinrichtung (68, 74, 68a, 52.1, 52.2) zum Koppeln der zweiten Betätigungseinrichtung mit der Zuspanneinrichtung,
**dadurch gekennzeichnet, dass**
der Bremssattel (16) eine mit einem Deckel (78) verschließbare Inspektionsöffnung (76) hat, durch die hindurch die zweite Kopplungseinrichtung (68, 74, 68a, 52.1, 52.2) inspiziert werden kann,
zu der zweiten Kopplungseinrichtung ein ein Betätigungsmoment übertragendes Zahnrad (68, 68a, 52.1, 52.2) gehört, das mit einer axial verschieblich gehaltenen und auf einer Druckspindel (48) sitzenden Nachstellmutter (40) eines Nachstellgetriebes der Zuspanneinrichtung unmittelbar oder über ein Zwischengetriebe (74) kämmt, wobei das Zahnrad (68, 68a, 52.1, 52.2) axial unverschieblich gehalten ist.

2. Scheibenbremse nach Anspruch 1, **dadurch gekennzeichnet, dass** die Inspektionsöffnung (76) mit einer Montageöffnung (80) kombiniert ist, durch die der Exzenter (20) und der Drehhebel (18) zum Montieren/Demontieren hindurchpassen.

3. Scheibenbremse nach Anspruch 2, **dadurch gekennzeichnet, dass** der Deckel (78) in angebrachtem Zustand die Inspektionsöffnung (76) und die Montageöffnung (80) verschließt.

4. Scheibenbremse nach einem der vorangehenden Ansprüche, **dadurch gekennzeichnet, dass** das Zahnrad (68a, 52.2) ein Kegelzahnrad ist.

5. Scheibenbremse nach einem der vorangehenden Ansprüche, **dadurch gekennzeichnet, dass** das Zahnrad (52.1, 52.2) axial mittels einer Feder (54) vorgespannt ist.

6. Scheibenbremse nach Anspruch 5, **dadurch gekennzeichnet, dass** die Feder (54) zum Zurückstellen der Zuspanneinrichtung bei Bremsentlastung dient.

7. Scheibenbremse nach einem der vorangehenden Ansprüche, **gekennzeichnet durch** eine Axialverzahnung (50) zum Koppeln des Zahnrades (52.1, 52.2) mit der Nachstellmutter (40).

8. Scheibenbremse nach einem der vorangehenden Ansprüche, **gekennzeichnet durch** einen Lagerblock (36) zum radialen Festlegen der Nachstellmutter (40).

## Claims

1. Disc brake, in particular for commercial vehicles, having
a brake calliper (16),
a brake application device which has an eccentric (20) which lies within the brake calliper and a rotary lever (18) which lies within the brake calliper,
a first actuating device (10) for the brake application device, which first actuating device (10) lies outside the brake calliper,
a first coupling device for coupling the first actuating device to the brake application device,
a second actuating device (64) for the brake application device and a second coupling device (68, 74, 68a, 52.1, 52.2) which lies within the brake calliper for coupling the second actuating device to the brake application device,
**characterized in that**
the brake calliper (16) has an inspection opening (76) which can be closed by way of a cover (78) and through which the second coupling device (68, 74, 68a, 52.1, 52.2) can be inspected,
a gearwheel (68, 68a, 52.1, 52.2) which transmits an actuating moment belongs to the second coupling device, which gearwheel (68, 68a, 52.1, 52.2) meshes directly or via an intermediate gear (74) with an adjusting nut (40) of an adjusting mechanism of the brake application device, which adjusting nut (40) is held in an axially displaceable manner and is seated on a pressure spindle (48), the gearwheel (68, 68a, 52.1, 52.2) being held in an axially non-displaceable manner.

2. Disc brake according to Claim 1, **characterized in that** the inspection opening (76) is combined with an assembly opening (80), through which the eccentric (20) and the rotary lever (18) fit for assembly/dismantling purposes.

3. Disc brake according to Claim 2, **characterized in that**, in the attached state, the cover (78) closes the inspection opening (76) and the assembly opening (80).

4. Disc brake according to one of the preceding claims, **characterized in that** the gearwheel (68a, 52.2) is a bevel gearwheel.

5. Disc brake according to one of the preceding claims, **characterized in that** the gearwheel (52.1, 52.2) is prestressed axially by means of a spring (54).

6. Disc brake according to Claim 5, **characterized in that** the spring (54) serves to reset the brake application device in the case of a brake release.

7. Disc brake according to one of the preceding claims, **characterized by** an axial spline system (50) for coupling the gearwheel (52.1, 52.2) to the adjusting nut (40).

8. Disc brake according to one of the preceding claims, **characterized by** a bearing block (36) for fixing the adjusting nut (40) radially.

## Revendications

1. Frein à disque, en particulier pour véhicules utilitaires, comprenant
un étrier de frein (16),
un dispositif de serrage qui présente un excentrique (20) situé à l'intérieur de l'étrier de frein et un levier pivotant (18) situé à l'intérieur de l'étrier de frein,
un premier dispositif d'actionnement (10) pour le dispositif de serrage, situé à l'extérieur de l'étrier de frein,
un premier dispositif d'accouplement pour l'accouplement du dispositif d'actionnement ou dispositif de serrage,
un deuxième dispositif d'actionnement (64) pour le dispositif de serrage et
un deuxième dispositif d'accouplement (68, 74, 68a, 52.1, 52.2) situé à l'intérieur de l'étrier de frein pour l'accouplement du deuxième dispositif d'actionnement au dispositif de serrage,
**caractérisé en ce que**
l'étrier de frein (16) présente une ouverture d'inspection (76) pouvant être fermée avec un couvercle (78), à travers laquelle le deuxième dispositif d'accouplement (68, 74, 68a, 52.1, 52.2) peut être inspecté,
une roue dentée (68, 68a, 52.1, 52.2) transmettant un couple d'actionnement appartient au deuxième dispositif d'accouplement, laquelle s'engrène avec un écrou de réajustement (40) retenu de manière déplaçable axialement et reposant directement ou par le biais d'un engrenage intermédiaire (74) sur une broche de pression (48) d'un engrenage de réajustement du dispositif de serrage, la roue dentée (68, 68a, 52.1, 52.2) étant retenue de manière immobile axialement.

2. Frein à disque selon la revendication 1, **caractérisé en ce que** l'ouverture d'inspection (76) est combinée à une ouverture de montage (80) à travers laquelle passent l'excentrique (20) et le levier pivotant (18) pour le montage/démontage.

3. Frein à disque selon la revendication 2, **caractérisé en ce que** le couvercle (78), dans l'état monté, ferme l'ouverture d'inspection (76) et l'ouverture de montage (80).

4. Frein à disque selon l'une quelconque des revendications précédentes, **caractérisé en ce que** la roue dentée (68a, 52.2) est une roue dentée conique.

5. Frein à disque selon l'une quelconque des revendications précédentes, **caractérisé en ce que** la roue dentée (52.1, 52.2) est précontrainte axialement au moyen d'un ressort (54).

6. Frein à disque selon la revendication 5, **caractérisé en ce que** le ressort (54) sert à ramener le dispositif de serrage lors du relâchement du frein.

7. Frein à disque selon l'une quelconque des revendications précédentes, **caractérisé par** une denture axiale (50) pour l'accouplement de la roue dentée (52.1, 52.2) à l'écrou de réajustement (40) .

8. Frein à disque selon l'une quelconque des revendications précédentes, **caractérisé par** un bloc-palier (36) pour la fixation radiale de l'écrou de réajustement (40).
